**Europäisches Patentamt**

**European Patent Office**

**Office européen des brevets**

(19)

(11) Veröffentlichungsnummer: **0 166 376**
A2

(12) # EUROPÄISCHE PATENTANMELDUNG

(21) Anmeldenummer: **85107616.6**

(22) Anmeldetag: **20.06.85**

(51) Int. Cl.⁴: **C 09 K 3/10, F 16 J 15/00**

(30) Priorität: **23.06.84 DE 3423286**

(43) Veröffentlichungstag der Anmeldung: **02.01.86**
**Patentblatt 86/1**

(84) Benannte Vertragsstaaten: **DE FR GB IT SE**

(71) Anmelder: **GOETZE AG,**
**Bürgermeister-Schmidt-Strasse 17,**
**D-5093 Burscheid 1 (DE)**

(72) Erfinder: **Zerfass, Hans-Rainer, Dr., Finkenweg 8,**
**D-5093 Burscheid (DE)**
Erfinder: **Bechen, Heribert, Dipl.-Ing., Wichheimer**
**Strasse 305, D-5000 Köln 80 (DE)**

(54) **Weichstoffflachdichtungsmaterial, insbesondere für die Herstellung von hochbeanspruchbaren Zylinderkopfdichtungen für Verbrennungskraftmaschinen.**

(57) Ein asbestfreies Weichstoffaservliesmaterial für insbesondere imprägnierte Zylinderkopfdichtungen und Auspuffflanschdichtungen in Verbrennungskraftmaschinen aus Gemischen von Fasern organischen und anorganischen, synthetischen und/oder natürlichen Ursprunges, Bindemitteln und mineralischen Füllstoffen enthält als Füllstoff bevorzugt 30 bis 40 Gew.-% eines Gemisches aus pyrogener Kieselsäure mit Feldspat, gefällter Kieselsäure und/oder Dolomit im bevorzugten Mischungsverhältnis zwischen 10:3 und 1:3. Das Weichstoffmaterial zeigt gegenüber herkömmlichen Materialien eine erheblich verbesserte und gleichmässigere Imprägniermittelaufnahme, und die hergestellten Dichtungen besitzen ein optimales Funktionsverhalten bei hoher Fliessgrenze und Belastbarkeit des Materials.

EP 0 166 376 A2

- 1 -

Weichstoffflachdichtungsmaterial, insbesondere für die
Herstellung von hochbeanspruchten Zylinderkopfdichtungen
für Verbrennungskraftmaschinen.

Die Erfindung betrifft ein Weichstoffflachdichtungsmaterial, insbesondere für die Herstellung hochbeanspruchbarer Flachdichtungen, wie Zylinderkopfdichtungen, Auspuffflanschdichtungen und ähnlichen Dichtungen für Verbrennungskraftmaschinen, bestehend aus einem asbestfreien und gegebenenfalls metallisch verstärkten Faservlies aus Mischungen von Fasern organischen und anorganischen, synthetischen und/oder natürlichen Ursprunges, Bindemitteln und mineralischen, pulverigen bis feinkörnigen Füllstoffen sowie gegebenenfalls einer Imprägnation des Fasermaterials mit einem im Endzustand vernetzten Imprägniermittel.

Herkömmliche Weichstoffzylinderkopfdichtungen für Verbrennungskraftmaschinen bestehen in der Praxis meist aus gegebenenfalls metallisch verstärkten Asbestfaservliesen. Diese können beispielsweise nach der DE-AS 23 04 558 vor allem zur Erhöhung der Querschnittsdichtigkeit mit einer im Endzustand plastisch oder elastisch vernetzten Substanz imprägniert sein.

Asbestfasern sind einerseits aufgrund ihrer guten physikalischen und chemischen Eigenschaften der ideale Werkstoff zur Herstellung der Zylinderkopfdichtungen, andererseits aber sind Asbestfasern und Asbeststäube stark gesundheitsgefährdend, so daß die Verwendung von Asbestfasern möglichst vermieden werden soll.

Deshalb hat man schon versucht, Weichstoffplatten für die Herstellung von Zylinderkopfdichtungen aus asbestfreien Fasermaterialien herzustellen. Die bekannten organischen und anorganischen Synthese- oder Naturfasern besitzen allerdings nicht alle idealen physikalischen und chemischen Eigenschaften der Asbestfasern zugleich, und deshalb verwendet man beispielsweise nach der DE-PS 29 14 173 Faservliese aus Gemischen verschiedener Faserarten, nämlich organischen Naturfasern, wie vor allem Cellulosefasern, und organischen und/oder anorganischen Synthesefasern für die Herstellung der Faservliese.

Da die aus diesen Fasermaterialien hergestellten Faservliese zur Herstellung von vor allem hoch beanspruchten Zylinderkopfdichtungen noch nicht voll befriedigend sind, verwendet man nach der DE-OS 32 32 255 Faservliese aus 15 bis 60 Gewichtsprozent Fasergemischen, 5 bis 20 Gewichtsprozent Bindemittel und 30 bis 70 Gewichtsprozent mineralischen, pulverigen bis feinkörnigen Füllstoffen, wie bevorzugt Kaolin, Porzellanerde, Schwerspat, Talkum, Gips, Kreide, Titandioxid, Quarz, Calciumsilikat, gemahlene Schlacke, Diatomeenerde und/oder gemahlene Mineralfasern.

Die nach der DE-OS 32 32 255 hergestellten Zylinderkopfdichtungen besitzen allerdings vor allem bei hohen Füllstoffgehalten eine schlechte Verankerung der Fasern und Füllstoffe untereinander und somit eine unzureichende Fe-

- 3 -

stigkeit. Bei der üblichen nachfolgenden Imprägnation zeigen derartige Dichtungen dann eine schlechte Benetzbarkeit mit dem Imprägniermittel, es ergeben sich lange Imprägnierzeiten und eine ungleichmäßige Imprägniermittelverteilung im Faservlies. Beim Vernetzen des Imprägniermittels zeigt das Material ein relativ starkes Quellen, und bei Druckbelastung beginnt das fertige Dichtungsmaterial schon bei niedrigen Dichtpressungsdrücken sich bleibend plastisch zu verformen. Die nach der DE-OS 32 32 255 hergestellten Zylinderkopfdichtungen sind daher nur bedingt verwendbar und vor allem als hoch belastbare Zylinderkopfdichtungen in speziellen Anwendungsfällen nicht geeignet.

Der vorliegenden Erfindung liegt daher die Aufgabe zugrunde, ein vorzugsweise asbestfreies Weichstofffaservliesmaterial aus Fasergemischen anorganischen und organischen Ursprunges mit Bindemittel und Füllstoffgehalten sowie einer Imprägnation zu schaffen, welches sich auch zur Herstellung hoch belastbarer Dichtungen, wie vor allem Zylinderkopfdichtungen von Verbrennungskraftmaschinen mit hohen Dichtpressungsdrücken eignet.

Erfindungsgemäß wird diese Aufgabe durch ein Weichstofffaservliesmaterial gelöst, welches als mineralische, pulverige bis feinkörnige Füllstoffkomponente ein Gemisch aus pyrogener hoch aktiver Kieselsäure und pulverigem bis feinkörnigem Feldspat, gefällter Kieselsäure und/oder Dolomit enthält. Die Menge an mineralischem Füllstoff insgesamt liegt bevorzugt zwischen 20 und 40 Gewichtspro-

- 4 -

zent (bezogen auf das Gewicht des Faservlieses), und es wurden optimale Ergebnisse erzielt, wenn im Füllstoffgemisch die Gewichtsverhältnisse zwischen pyrogener Kieselsäure mit Feldspat, gefällter Kieselsäure und/oder Dolomit zwischen 10 : 3 und 1 : 3 liegen. Die mit dem erfindungsgemäßen Weichstoffaservliesmaterial in üblicher Weise hergestellten Dichtungen werden in bekannter Weise mit einem bevorzugt thermisch vernetzbaren Imprägniermittel imprägniert.

Ein bevorzugt eingesetztes Faservliesmaterial besteht aus

    5 bis 15 Gew.-% Sulfatzellstoff

    5 bis 15 Gew.-% Aramid- und/oder Polyacrylnitrilfaser

  10 bis 30 Gew.-% Metallfaser, Schlackenfaser und/
                 oder Glasfaser

  20 bis 40 Gew.-% Füllstoffgemisch aus pyrogener
                 Kieselsäure und Feldspat, gefüllter Kieselsäure und/oder Dolomit
                 und

    5 bis 15 Gew.-% Bindemittel auf Latexbasis.

Die auf diese Weise hergestellten Flachdichtungen wurden durch Messung ihres Funktionsverhaltens insbesondere in Bezug auf ihre Eignung zur Verwendung als hoch belastbare Zylinderkopfdichtungen untersucht. Zusätzlich wurden die so hergestellten Zylinderkopfdichtungen in Motoren getestet. Dabei zeigte es sich, daß die mit den erfindungsgemäßen Weichstofffaservliesplatten hergestellten Zylin-

- 5 -

derkopfdichtungen denen der DE-OS 32 32 255 wesentlich überlegen waren. Die erfindungsgemäß hergestellten Dichtungen zeigten eine gute Imprägnierbarkeit mit gleichmäßiger Imprägniermittelverteilung im Faservlies, eine sehr geringe Dickenzunahme des Faservlieses beim Imprägnieren und beim anschließenden Vernetzen ein geringes Quellverhalten. Das an der fertigen Dichtungsplatte gemessene Funktionsverhalten zeigte auch bei hohen Dichtpressungsdrücken auch unter Wärmebelastung eine gute Verformungsstabilität, so daß die Dichtungen auch in Motoren mit extremen Belastungen eingesetzt werden können.

Durch den erfindungsgemäßen Einsatz des Gemisches aus pyrogener Kieselsäure mit den Feldspaten, gefüllten Kieselsäuren und/oder dem Dolomit im Faservliesmaterial als Füllstoff können somit asbestfreie, imprägnierte Flachdichtungen mit guter Imprägnierbarkeit bei gleichzeitiger extremer Belastbarkeit hergestellt werden. Die Anwesenheit der gefällten Kieselsäure, dem Dolomit oder dem Feldspat scheint dabei die Imprägnierbarkeit, die Imprägniermittelverteilung und die Imprägnierzeiten des Faservlieses wesentlich zu verbessern, während die pyrogene Kieselsäure offensichtlich die anschließende Vernetzung des Imprägniermittels und damit dessen Festigkeit wesentlich steigert. Gefunden wurde, daß optimale Ergebnisse, insbesondere in Bezug auf die Fließgrenze der Dichtung, beim Einsatz der Füllstoffgemische mit den angegebenen Gewichtsverhältnissen erzielt werden können.

Während die Erfindung sich vorzugsweise auf die Herstel-

- 6 -

lung von asbestfreien Weichstoffaservliesmaterialien für imprägnierte Zylinderkopfdichtungen bezieht, ist es auch möglich, das Material für die Herstellung ähnlich belasteter Dichtungen zu verwenden.

Die Erfindung wird anhand eines Ausführungsbeispieles näher erläutert.

Ausgegangen wird von einer wässrigen Aufschlämmung aus

15 Gewichtsteilen Sulfatzellstoff (Faserlänge 1 mm) 15 Gewichtsteilen Polyamid (Aradmid) (Faserlänge 1 mm)

30 Gewichtsteilen Glasfaser (durchschnittliche Faserlänge 1 mm)

10 Gewichtsteilen Nitrilbutadienlatex

30 Gewichtsteilen Füllstoff aus 1 Gewichtsteil pyrogener Kieselsäure und 3 Gewichtsteilen Feldspat.

Nach einem Papierherstellungsverfahren wurde aus der Aufschlämmung in gewohnter Weise ein Weichstoffaservliesmaterial von etwa 1 mm Dicke hergestellt, und durch beidseitiges Aufwalzen des Materials auf ein verstärkendes Rauhzackenblech, Ausstanzen der Durchgangsöffnungen und Einfassen der Brennraumöffnungen wurde die rohe Zylinderkopfdichtung hergestellt. Beim Imprägnieren mit einem peroxidisch vernetzenden flüssigen Polybutadien durch Tauchen zeigte das Dichtungsmaterial schon nach 5 Minuten Tauchzeit eine ausreichende und gleichmäßige Porenfüllung von 80 %. Anschließend erfolgte die Vernetzung des Im-

- 7 -

prägniermittels über 3 Minuten bei 280°C.

Die Dichtung zeigte im Test eine hervorragende mechanische und thermische Belastbarkeit, und zwar wurden bei mechanischen Belastungen der Dichtungen von 350 N/mm² noch keine Zerstörungen festgestellt, während das Material bei Temperaturen von über 200°C Belastungen von über 240 N/mm² aushielt.

- 1 -

Patentansprüche:

1. Weichstoffflachdichtungsmaterial, insbesondere für die Herstellung hoch beanspruchbarer Flachdichtungen, wie Zylinderkopfdichtungen, Auspuffflanschdichtungen und ähnlich belasteten Dichtungen für Verbrennungskraftmaschinen, bestehend aus einem asbestfreien und gegebenenfalls metallisch verstärkten Faservlies aus Mischungen von Fasern organischen oder anorganischen, synthetischen und/oder natürlichen Ursprunges, Bindemitteln und mineralischen, pulverigen bis feinkörnigen Füllstoffen sowie einer Imprägnation des Faservlieses mit einer vernetzbaren Flüssigkeit, dadurch gekennzeichnet, daß der Füllstoff aus einem Gemisch aus pyrogener Kieselsäure mit Feldspat, gefällter Kieselsäure und/oder Dolomit besteht.

2. Dichtungsmaterial nach Anspruch 1, dadurch gekennzeichnet, daß die Menge an mineralischem Füllstoff, bezogen auf das rohe, nicht imprägnierte Fasermaterial, zwischen 20 und 40 Gew.-% beträgt.

3. Dichtungsmaterial nach den Ansprüchen 1 und 2, dadurch gekennzeichnet, daß in der mineralischen Füllstoffmischung das Verhältnis an pyrogener Kieselsäure zu Feldspat, gefällter Kieselsäure und/oder Dolomit zwischen 10 : 3 und 1 : 3 liegt.

4. Dichtungsmaterial nach den Ansprüchen 1 bis 3, dadurch gekennzeichnet, daß das Weichstoffflachdichtungsmaterial aus

5 bis 15 Gew.-% Sulfatzellstoffaser

bis zu 15 Gew.-% Polyamidfaser und/oder Polyacrylnitrilfaser

10 bis 30 Gew.-% Schlackenfaser und/oder Glasfaser

20 bis 40 Gew.-% Füllstoffgemisch aus pyrogener Kieselsäure und Feldspat, Dolomit und/oder gefällter Kieselsäure

5 bis 15 Gew.-% Bindemittel auf Latexbasis

besteht.